# EUROPEAN PATENT SPECIFICATION

(11) **EP 4 682 485 B1**
(45) Date of publication and mention of the grant of the patent: **09.09.2026**
(21) Application number: 25189958.9
(22) Date of filing: 16.07.2025
(51) Int. Cl.: G01J 1/04, G01J 5/0802, G01J 5/0875

(54) **INFRARED SENSOR ASSEMBLY AND METHOD OF MANUFACTURING SAME**
INFRAROTSENSORANORDNUNG UND VERFAHREN ZUR HERSTELLUNG DAVON
ENSEMBLE CAPTEUR INFRAROUGE ET SON PROCÉDÉ DE FABRICATION

(30) Priority: 20.07.2024 LU 507808
(43) Date of publication of application: 21.01.2026
(73) Proprietor: OroraTech GmbH, 81669 München (DE)
(72) Inventor: SCHNIERLE, Patrick, 81669 Munich (DE); GEISMAYR, Laura, 81669 Munich (DE)
(74) Representative: MERH-IP Matias Erny Reichl Hoffmann Patentanwälte PartG mbB

(56) References cited:
- EP-A1- 4 220 264
- JP-B2- 5 767 802

## Description

### Technical Field

This disclosure generally relates to infrared (IR) sensor assemblies and methods of manufacturing IR sensor assemblies. In particular, the disclosure relates to IR sensor assemblies for use in small satellites (such as CubeSats, for example), especially IR sensor assemblies comprising multiple planar filters that are arranged or arrangeable side by side in close proximity to a sensor.

### Background

For certain applications such as space-based Earth observation for fire detection, it is desirable to be able to make observations in two or more different spectral bands, for example in the infrared (IR) range. It may further be desirable to perform such observations using a small satellite, such as a CubeSat, for example, with a single optical system. Any such optical system, including filters, shutters, etc., should preferably be able to withstand mechanical loads (such as shock or vibration) during launch of the satellite aboard a launch vehicle.

Existing solutions for larger satellites may involve multi-spectral imaging using beam splitters and individual optical filters, use of optical gratings, or use of filter wheels. However, these solutions are not suitable for use abord smaller satellites.

On the other hand, integrated solutions that may be applicable to smaller satellites tend to involve filter assemblies with significant complexity and manufacturing cost, typically in excess of 25k€ per unit. In addition, such filter assemblies may be inflexible in that once they are finalized, changes of the installed optical filters are not possible anymore. Such solutions for filter assemblies suitable for use in small satellites may include Bayer filter arrays or monolithic stick arrays composed of strips of substrate that are glued together, for example.

In a co-owned patent application published as EP 4 220 264 A1, optical filters are held by means of a filter mount. While this solution may by suitable for smaller satellites, it may suffer from crosstalk between different spectral bands.

Thus, there is a need for improved IR sensor assemblies and methods of manufacturing such IR sensor assemblies. There is further need for such IR sensor assemblies that are suitable for use aboard (small) satellites and that can withstand mechanical loads such as during launch. There is further need for such IR sensor assemblies that can avoid or reduce cross talk between spectral bands. There is yet further need for such IR sensor assemblies that have reduced complexity and footprint, and that can be manufactured in a cost-effective manner.

### Summary

In view of some or all of these needs, the present invention proposes an IR sensor assembly according to claim 1 and a method according to claim 14 of manufacturing an IR sensor assembly.

The present invention relates to an infrared (IR) sensor assembly for use in a satellite (e.g., small satellite). The IR sensor assembly includes an IR sensor. The IR sensor includes a substantially plane front surface with a window portion. The window portion covers an active area of the IR sensor. The IR sensor assembly further includes one or more planar optical filters. Preferably, the IR sensor assembly may comprise a plurality of planar optical filters. The planar optical filters may have rectangular shape, for example. The IR sensor assembly yet further includes an adhesive tape provided (e.g., applied, attached, or affixed) on the front surface, outside of the window portion. The adhesive tape at least partially surrounds the window portion. Further, the one or more planar optical filters are arranged tc cover at least part of the window portion, with at least part of each planar optical filter resting on the adhesive tape.

Configured as described above, the proposed design provides a cost-effective solution for making observations in two or more different spectral bands, for example in the IR range. Specifically, the proposed sensor assembly allows for use of an arbitrary number of off-the-shelf optical filters that can be cut into shape and placed in close proximity to the sensor. Since the optical filters can be arranged very close to the sensor, cross talk between different spectral bands (e.g., associated with neighboring filters) can be significantly reduced and excellent thermal coupling between sensor and filters can moreover be achieved. The proposed design moreover is compact and allows for easy adaptation to boundary conditions including filter sizes, filter number, and available volume/footprint.

In some embodiments, the one or more planar optical filters may be arranged so that each planar optical filter has a first portion that is positioned in front of the window portion and one or more second portions that are positioned in front of the front surface, outside of the window portion, and that rest on the adhesive tape.

In some embodiments, the one or more planar optical filters may be arranged so that respective end portions or peripheral portions of the planar optical filters rest on the adhesive tape.

In some embodiments, the adhesive tape may be a Polyimide tape. Further, in some embodiments, the adhesive tape may have a thickness in the range from 4µm to 16 µm.

In some embodiments, the one or more planar optical filters may include or relate to a plurality of planar optical filters. The plurality of planar optical filters may be arranged side by side, with one of the lateral surfaces (e.g., edges) of each planar optical filter extending in parallel to and facing one of the lateral surfaces (e.g., edges) of another planar optical filter. It is understood that the planar optical filters may have rectangular shape. Using the proposed design of the sensor assembly, the plurality of planar optical filters can be provided side by side, without being glued to each other, while still featuring very good mechanical stability, especially with regard to vibrational loads.

In some embodiments, the IR sensor assembly may further include a frame-shaped holding part (e.g., clamp part). The frame-shaped holding part may include a top part (e.g., contacting part or pressing part) for limiting movement of the one or more planar optical filters in a vertical direction, i.e., a direction perpendicular to the front surface of the IR sensor. In some cases, this may be achieved by contacting the one or more planar optical filters and pushing (e.g., pressing) the one or more planar optical filters towards the front surface of the IR sensor. The frame-shaped holding part may further include a lateral wall part. The lateral wall part may limit movement of the one or more planar optical filters in directions parallel to the front surface of the IR sensor to some degree. In some implementations, both the IR sensor and the holding part may be fixed to a common substrate, such as an interface plate, so that the holding part can contact and limit movement of the one or more planar optical filters, for example by pushing the one or more planar optical filters towards the front surface of the IR sensor.

In some embodiments, the holding part may include one or more first through holes in the lateral wall part, each first through hole allowing for insertion of a positioning rod, for pushing (e.g., pressing) one of the one or more planar optical filters that faces the respective first through hole towards a portion of the lateral wall part opposite the respective first through hole.

In some embodiments, the holding part further may include one or more end stops arranged at a portion of the lateral wall part opposite the one or more first through holes, for defining a clearance between the portion of the lateral wall part opposite the one or more first through holes and one of the one or more planar optical filters that faces said portion of the lateral wall part.

In some embodiments, the IR sensor assembly may further include compressible glue (e.g., silicone glue) for holding the one or more planar optical filters in place in a lateral direction. The compressible glue may be provided in an enclosure formed between the holding part and the front surface.

Since the optical filters are not rigidly fixed to the sensor, but are rather held in place by compressible glue that allows for slight relative (especially lateral) movement, the proposed design can compensate for mechanical stress, for example mechanical stress due to thermal expansion, and mechanical loads. The proposed design in general features high resilience to mechanical loads, such as vibrational loads, as are typically present during launches of spacecraft carrying satellite payloads, without putting the optical filters at risk of bursting or cracking.

In some embodiments, the holding part (e.g., the top part thereof) may include one or more second through holes. Each second through hole may allow for insertion of compressible glue (e.g., silicone glue) into a clearance formed between one of the one or more planar optical filters that faces the respective second through hole and the holding part (e.g., a portion of the lateral wall part).

In some embodiments, the clearance may further extend into a gap formed between the one of the one or more planar optical filters that faces the respective second through hole and the top part.

In some embodiments, the one or more planar optical filters may be optically transparent in respective IR wavelength ranges. For example, different planar optical filters may be transparent in different IR wavelength ranges.

Another aspect of the invention relates to a method according to claim 14 of manufacturing an IR sensor assembly for use in a satellite, such as a small satellite.

In some embodiments, the one or more planar optical filters may be arranged so that each planar optical filter has a first portion that is positioned in front of the window portion and one or more second portions that are positioned in front of the front surface, outside of the window portion, and that rest on the adhesive tape. Additionally or alternatively, the one or more planar optical filters may be arranged so that respective end portions or peripheral portions of the planar optical filters rest on the adhesive tape.

In some embodiments, the adhesive tape may be a Polyimide tape. Additionally or alternatively, the adhesive tape may have a thickness in the range from 4µm to 16 µm.

In some embodiments, the method may further include providing a frame-shaped holding part (e.g., clamp part). The frame-shaped holding part may include a top part (e.g., contacting part or pressing part) for limiting movement of the one or more planar optical filters in a direction perpendicular to the front surface of the IR sensor (vertical direction). The holding part may further include a lateral wall part.

It should be noted that the methods and apparatus (e.g., assemblies) including the preferred embodiments as outlined in the present patent application may be used stand-alone or in combination with the other methods and apparatus disclosed in this document. Furthermore, all aspects of the methods and apparatus outlined in the present patent application may be arbitrarily combined. In particular, the features of the claims may be combined with one another in an arbitrary manner.

It will be appreciated that apparatus features and method steps may be interchanged in many ways. In particular, the details of the disclosed IR sensor assembly can be realized by the corresponding manufacturing method, and vice versa, as the skilled person will appreciate. Moreover, any of the above statements made with respect to the IR sensor assembly (and, e.g., its parts, elements, etc.) are understood to likewise apply to the corresponding manufacturing method (and, e.g., its steps), and vice versa. The scope of the invention is defined by the appended claims.

### Brief Description of the Figures

Example embodiments of the disclosure are explained below with reference to the accompanying drawings, wherein
Fig. 1 is a schematic cut view of an example detail of an IR sensor assembly according to embodiments of the disclosure,
Fig. 2 is a schematic top view of an example of an IR sensor assembly according to embodiments of the disclosure, and
Fig. 3 is a flowchart schematically illustrating an example method of manufacturing an IR sensor assembly according to embodiments of the disclosure.

### Detailed Description

In the following, example embodiments of the disclosure will be described with reference to the appended figures. Identical elements in the figures may be indicated by identical reference numbers, and repeated description thereof may be omitted.

In view of the aforementioned technical problem, the present disclosure seeks to provide a sensor assembly suitable for use in a satellite (in particular, small satellite) that positions up to a plurality of optical filters in close proximity in front of a detector (e.g., IR sensor) in a simple and robust manner. By arranging the filters close to the detector, cross talk between spectral bands of neighboring filters can be reduced or altogether avoided. On the other hand, realizing such close positioning may be difficult especially if high resilience with regard to mechanical loads (e.g., vibration and/or shock), such as mechanical loads that may occur during rocket launch, is aimed for.

In such framework, the present disclosure proposes use of (possibly multiple) strip-shaped (i.e., rectangular) optical filters. These filters may have different sizes and/or aspect ratios. Moreover, the detector is protected by using adhesive tape that is provided on a front surface of the detector, but outside of its active area (or outside of a window covering its active area, as the case may be). The optical filters may then be positioned directly on top of the detector that is protected by the adhesive tape. The distance between the optical filters and the detector then essentially corresponds to a thickness of the adhesive tape.

The optical filters may be enclosed or framed, and thereby kept in place, by a frame part that is fixed to the detector or a common substrate on which the detector is mounted, using compressible glue, such as silicone glue, for example.

Thereby, the present disclosure can provide (optical, e.g., IR) sensor assemblies for making space-based observations in two or more different spectral bands, for example in the infrared (IR) range. Moreover, resulting sensor assemblies can be made compact, simple, and can allow for use of optical filters that can be bought off-the-shelf and only need to be cut to appropriate dimensions. They are also able to withstand mechanical loads (such as shock or vibration) during launch of a space vehicle including the sensor assemblies.

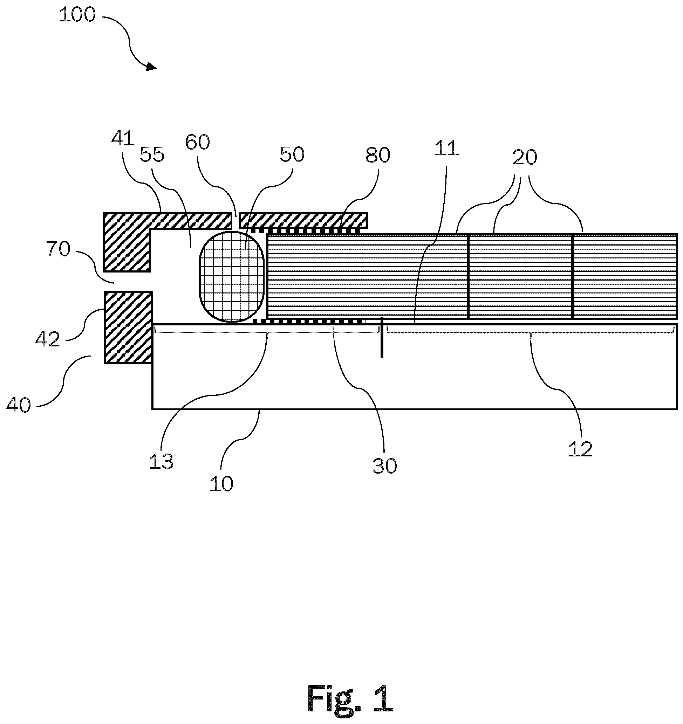

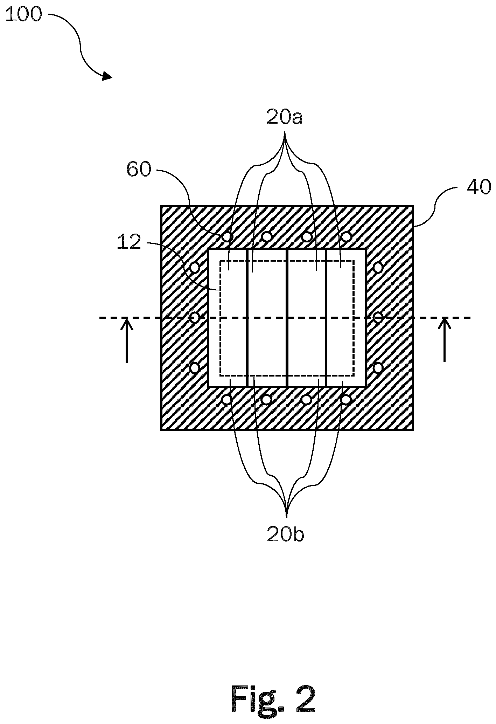

Fig. 1 is a schematic cut view of an example detail of an IR sensor assembly 100 according to embodiments of the disclosure. Fig. 2 is a schematic top view of the IR sensor assembly 100, wherein the cut plane of the cut view of Fig. 1 is indicated by a dashed line.

It is understood that the sensor assembly 100 is suitable for use in a satellite, in particular a small satellite, such as a CubeSat, for example.

The sensor assembly 100 comprises an IR sensor 10 as well as one or more planar optical filters 20.

The IR sensor 10 comprises a substantially plane front surface 11. The front surface 11 includes a window portion 12 that covers an active area of the IR sensor, as well as a portion 13 outside of the active area (or outside of the window portion 12).

Preferably, the sensor assembly 100 comprises a plurality of planar optical filters 20. Each of these optical filters 20 may have rectangular shape (i.e., may be strip-shaped), but it is understood that the rectangular shapes (e.g., sizes and/or aspect ratios) of different filters may be different from each other. As can be seen from Fig. 1, the plurality of planar optical filters 20 may be arranged side by side, with one of the lateral surfaces (e.g., edges) of each planar optical filter 20 extending in parallel to and facing one of the lateral surfaces (e.g., edges) of another planar optical filter 20. In line with the intended purpose, the one or more planar optical filters 20 may be optically transparent in respective (e.g., different) infrared wavelength ranges.

The sensor assembly 100 further comprises an adhesive tape 30 provided on the front surface 11 of the sensor 10, but outside of the window portion 12. In particular, the adhesive tape 30 is provided (e.g., applied, affixed, or attached) to the sensor 10 so that it at least partially surrounds the window portion 12.

Without intended limitation, the adhesive tape 30 may be a Polyimide tape. It is preferred in any case that the adhesive tape 30 is made from a material that is not subject to outgassing under vacuum conditions. Moreover, without intended limitation, the adhesive tape 30 may have a thickness in the range from 4µm to 16 µm, depending on circumstances and implementations.

Now, the one or more (e.g., multiple) planar optical filters 20 are arranged relative to the sensor 10 (and the adhesive tape 30) such that they cover at least part of the window portion 12, with at least part of each planar optical filter 20 resting on the adhesive tape 30. Thereby, it is ensured that the planar optical filters 20 can be arranged in close proximity to the sensor 10, without actually contacting the sensor 10.

For example, the one or more planar optical filters 20 may be arranged so that each planar optical filter 20 has a first portion 20a that is positioned in front of the window portion 12 and one or more second portions 20b that are positioned in front of the front surface 11, outside of the window portion 12, and that rest on the adhesive tape 30.

In another example, the one or more planar optical filters 20 may be arranged so that respective end portions or peripheral portions of the planar optical filters 20 rest on the adhesive tape 30.

Notably, the aforementioned examples are not necessarily exclusive.

For holding and/or for pushing (e.g., pressing) the planar optical filters 20 towards the sensor 10, the sensor assembly 100 may further comprise a frame-shaped holding part (e.g., clamp part) 40. This frame-shaped holding part 40 comprises a top part (e.g., contacting part or pressing part) 41 for limiting vertical movement of the planar optical filters 20, i.e., movement in a direction perpendicular to the front surface 11 of the sensor 10. To this end, the top part may contact the planar optical filters and push (e.g., press) the one or more planar optical filters 20 towards the front surface 11 of the IR sensor 10. The holding part 40 further comprises a lateral wall part 42. The holding part 40 may be fixed to, or fixed relative to, the sensor 10. For example, both the sensor 10 and the holding part 40 may be fixed to a common substrate (e.g., an interface plate) so that the holding part 40 can hold the planar optical filters in place by limiting vertical movement thereof. In some cases, this may involve pressing the one or more planar optical filters 20 towards the front surface 11 of the sensor 10. Additionally or alternatively, the holding part may serve as a means to contain compressible glue (e.g., silicone glue) 50 for holding the planar optical filters 20 in place. In this sense, the holding part 40 may act as a counterpart for the compressible glue 50, for the latter to be able to exert force on the planar optical filters 20, for holding them in place.

In the present context, the holding part 40 being "frame-shaped" means that the holding part 40 (or more specifically, the top part 41) has an opening that allows for incidence of radiation on the active area of the sensor 10, through the window portion 12. The lateral wall part 42 laterally surrounds the one or more optical filters 20.

To protect the one or more planar optical filters 20 from damage and to avoid stress rupture of the planar optical filter(s) 20 due to formation of dents or notches in the top part 41, the sensor assembly 100 may further comprise a protective layer 80 (e.g., adhesive tape, such as Polyimide tape) covering the relevant surfaces of the one or more planar optical filters 20. For instance, the protective layer 80 may cover those portions of the upper surfaces of the planar optical filters 20 that are (or that would otherwise be) in contact with the top part 41 of the holding part 40. In such configurations, the protective layer 80 may be provided on the relevant (upper) filter surface(s) and/or on the relevant (lower) surface(s) of the top part 41.

To be able to compensate for thermal expansion of the planar optical filters 20 and/or the holding part 40, the planar optical filters 20 may be floating, i.e., there may be floating support of the planar optical filters 20 by the adhesive tape 30. This allows for relative movement of the planar optical filters 20 relative to the sensor 10 and relative to each other, thereby allowing to compensate for, for example, thermal expansion of the planar optical filters 20. It is understood that the holding 40 part is configured (e.g., dimensioned, arranged, etc.) to allow for such floating movement of the planar optical filters 20.

To hold the one or more optical filters 20 in place especially in a lateral direction, but depending on implementations also in the vertical direction, the sensor assembly 100 may further comprise compressible glue (e.g., silicone glue) 50. The compressible glue 50 may be provided in an enclosure, clearance, or cavity 55 formed between (a portion of) the holding part 40 and (a portion of) the front surface 11 of the sensor 10. This clearance 55 may to some degree extend into a gap formed between (an upper surface of) a given optical filter 20 and the top part 41.

Further, as can be seen from **Fig.** 1 and **Fig.** 2, the holding part 40 may comprise a plurality of through holes 60, 70. In detail, the lateral wall part 42 of the holding part 40 may comprise one or more first through holes 70, and the top part 41 of the holding part 40 may comprise one or more second through holes 60.

The second through holes 60 will be described first. These through holes are (small) holes in the top part 41 for insertion of compressible glue (e.g., silicone glue) 50 into the clearance 55 (see Fig. 1). Specifically, each second through hole 60 may allow for insertion of compressible glue 50 into the clearance 55 formed between (a lateral edge of) the one of the one or more planar optical filters 20 that faces the respective second through hole, a portion of the lateral wall part 42, and a portion of the top part 41. The compressible glue 50, as noted above, is intended to provide for at least lateral fixation of the one or more planar optical filters 20 and for providing additional damping (e.g., vibration damping). Vertical fixation of the one or more planar optical filters 20 on the other hand is primarily achieved by the planar optical filters' 20 vertical motion being limited by the holding part 40 (i.e., the top part 41) and the compressible glue 50 inserted into the clearance 55, with the holding part 40 acting as counterpart for the compressible glue 50. The compressible glue 50 may (e.g., locally) also enter gaps between the front surface 11 of the sensor 10 (provided with the adhesive tape 30) and the planar optical filters 20. As noted above, this allows, to some degree, for relative movement of the planar optical filters 20 relative to the sensor 10, relative to each other, and relative to the holding part 40, thereby allowing to compensate for, for example, thermal expansion of the planar optical filters 20 and the holding part 40 and mechanical tolerances both in horizontal and vertical direction.

Before inserting the compressible glue (e.g., silicone glue) 50 via the second through hole(s) 60, it may be desirable to accurately position the optical filter(s) 20 relative to, for example, the sensor 10 or its window portion 12. To this end, the lateral wall part 42 of the holding part 40 may comprise first through holes 70 as mentioned above, and optionally, end stops (not shown in the figures) that are provided at an inner side of the lateral wall part 42.

The first through holes 70 are through holes that each have sufficient diameter for insertion of a positioning rod. By insertion of the positioning rod through respective first through holes 70, the one of the one or more planar optical filters 20 that faces the respective first through hole 70 can be pressed or moved away from the respective first through hole 70, towards a portion of the lateral wall part 42 opposite the respective first through hole 70.

Assuming a rectangular or substantially rectangular holding part 40, the first through holes 70 may be provided on all four sides of the holding part 40 (i.e., lateral wall part 42). In one example, the first through holes 70 may be provided (at least) in two non-opposite lateral sides of the holding part 40. In any case, the first through holes 70 may be provided such that position adjustment of the one or more planar optical filters 20 in two orthogonal directions in the plane of the surface 11 of the sensor 10 is possible.

For more accurate positioning, the sensor assembly 100 may further comprise the one or more end stops arranged at a portion (or respective portions) of the lateral wall part 42 opposite the one or more first through holes 70. These end stops may serve for defining a clearance between the portion of the lateral wall part 42 opposite the one or more first through holes 70 and the one of the one or more planar optical filters 20 that faces said portion of the lateral wall part 42. Therein, the first through holes 70 and the end stops may not necessarily have to be in a one-to-one relationship. It may be sufficient that the end stops are provided such as to ensure a well-defined position of the one or more planar optical filters 20 when the planar optical filters 20 are pressed by the positioning rod(s) via respective first through holes 70.

For a rectangular holding part 40, (at least) two non-adjacent sides of the four sides of the holding part 40 (i.e., lateral wall part 42) may have first through holes 70 and the two remaining sides may have end stops. Alternatively, all sides may have first through holes 70 and end stops, to allow for increased flexibility in positioning the one or more planar optical filters 20.

To make the sensor assembly 100 suitable for applications in space, the materials used for the sensor assembly 100 may feature little or no outgassing. This applies, mainly, to the compressible glue (e.g., silicone glue) 50, but may also apply to the adhesive tape 30 and/or the protection layer 80. The outgassing characteristics of the materials used may be examined and tested, for example, in a thermal vacuum chamber.

The holding part 40 may be a rigid element and may be made from aluminum. For example, the holding part 40 may be milled from the solid.

Configured as described above with reference to Fig. 1 and Fig. 2, the sensor assembly 100 provides a cost-effective solution for making observations in different spectral bands, for example in the IR range. Specifically, the sensor assembly 100 allows for use of an arbitrary number of off-the-shelf optical filters that can be cut into shape and placed in close proximity (e.g., few µm) to the sensor 10. Using the proposed design, it is not necessary to fix (e.g., glue) the filters one to another.

Since the optical filters 20 can be arranged very close to the sensor 10, cross talk between different spectral bands (e.g., associated with neighboring filters) can be significantly reduced. In addition, excellent thermal coupling between sensor 10 and filters 20 can be achieved.

The proposed design moreover is compact and allows for easy adaptation to boundary conditions including filter sizes, filter number, and available volume/footprint. Since the optical filters 20 are not rigidly fixed to the sensor 10, but are rather held in place by compressible glue 55 that allows for slight relative movement, the proposed design can account for mechanical stress, for example due to thermal expansion and mechanical loads. The proposed design therefore features high resilience to mechanical loads, such as vibrational loads as are typically present during launches of spacecraft carrying satellite payloads, without putting the optical filters 20 at risk of bursting or cracking.

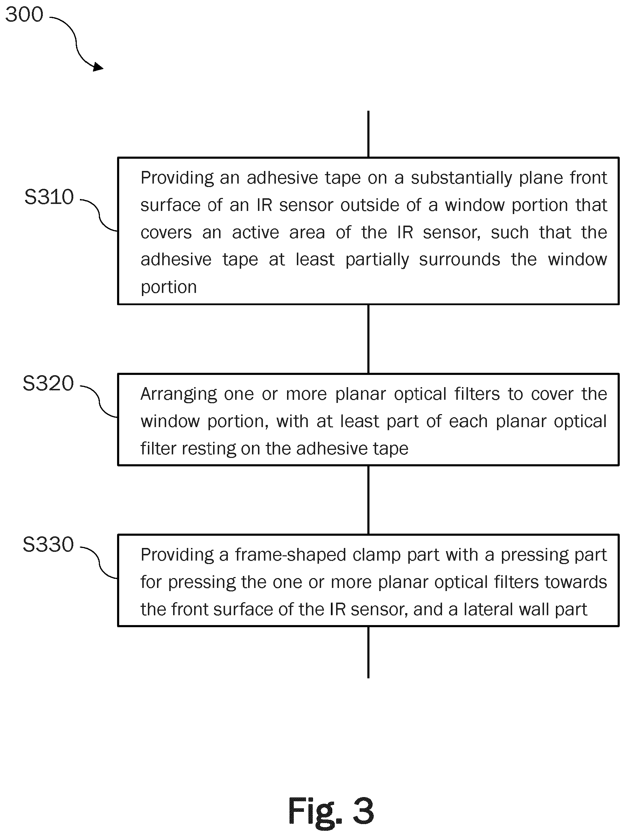

Fig. 3 is a flowchart schematically illustrating an example of a method 300 of manufacturing an IR sensor assembly according to embodiments of the disclosure. It is understood that this IR sensor assembly may be suitable for use in a satellite, in particular a small satellite. It may comprise one or more planar optical filters and an IR sensor with a substantially plane front surface including a window portion covering an active area of the IR sensor. It is further understood that performing method 300 may yield the IR sensor assembly 100 described above with reference to Fig. 1 and Fig. 2 and that certain implementation details of the IR sensor assembly 100 are not expressly repeated for the corresponding method, for reasons of conciseness. As shown in the flowchart, method 300 comprises steps S310 through S330, of which step S330 is an optional step. The method may additionally comprise optional steps as set out further below that are not shown in Fig. 3.

At step S310, an adhesive tape is provided on the substantially plane front surface of the IR sensor. Specifically, the adhesive tape is provided outside of the window portion that covers the active area of the IR sensor. Further, the adhesive tape is provided such that it at least partially surrounds the window portion.

The adhesive tape applied at this step may be a Polyimide tape, for example. Moreover, depending on implementations and without intended limitation, the adhesive tape may have a thickness in the range from 4µm to 16 µm.

At step S320, one or more planar optical filters are arranged to cover the window portion, with at least part of each planar optical filter resting on the adhesive tape.

For example, the one or more planar optical filters may be arranged so that each planar optical filter has a first portion that is positioned in front of the window portion and one or more second portions that are positioned in front of the front surface, outside of the window portion, and that rest on the adhesive tape.

As another example, the one or more planar optical filters may be arranged so that respective end portions or peripheral portions of the planar optical filters rest on the adhesive tape.

At step S330, a frame-shaped holding part (e.g., clamp part) is provided. The frame-shaped holding part comprises a top part (e.g., contacting part or pressing part) for limiting movement or the one or more planar optical filters in a direction perpendicular to the front surface of the IR sensor, and a lateral wall part.

Method 300 can further include any, some, or all of the following optional steps (not shown in Fig. 3).

For example, the method may further include, after fastening the frame-shaped holding part relative to the IR sensor, (a step of) inserting compressible glue (e.g., silicone glue) into a clearance formed between the planar optical filters and the lateral wall part of the holding part (and also the top part of the holding part), via through holes formed in the holding part (e.g., in the top part of the clamp part). It is understood that this step will yield a configuration including compressible glue as described above in connection with Fig. 1 and Fig. 2.

As another example, the method may further include, after fastening the holding part to, or relative to, the sensor (e.g., by fixation of both the holding part and the sensor to an interface plate), and before inserting the compressible glue, (a step of) positioning the one or more planar optical filters using a positioning rod, via through holes in the lateral wall part of the holding part, possibly by pushing one or more of the one or more planar optical filters against respective end stops, as described above. In some implementations, screws or other fixation means holding the holding part may not be fully tightened at first to allow for some movement of the planar optical filter(s) for final positioning, and may be fully tightened only after final positioning of the planar optical filter(s) has been achieved.

It should be noted that the description and drawings merely illustrate the principles of the proposed IR sensor assembly and manufacturing method. Those skilled in the art will be able to implement various arrangements that, although not explicitly described or shown herein, embody the principles of the invention and are included within its scope as defined by the appended claims.

Furthermore, all examples and embodiment outlined in the present disclosure are principally intended expressly to be only for explanatory purposes to help the reader in understanding the principles of the proposed method and device. Furthermore, all statements herein providing principles, aspects, and embodiments of the invention, as well as specific examples thereof, are intended to encompass equivalents thereof.

## Claims

1. An infrared, IR, sensor assembly (100) for use in a satellite, comprising:
an IR sensor (10), wherein the IR sensor comprises a substantially plane front surface (11) with a window portion (12), the window portion (12) covering an active area of the IR sensor;
one or more planar optical filters (20); and
an adhesive tape (30) provided on the front surface (11) outside of the window portion (12), the adhesive tape (30) at least partially surrounding the window portion (12),
wherein the one or more planar optical filters (20) are arranged to cover at least part of the window portion (12), with at least part of each planar optical filter (20) resting on the adhesive tape (30).

2. The IR sensor assembly according to claim 1, wherein the one or more planar optical filters are arranged so that each planar optical filter has a first portion that is positioned in front of the window portion and one or more second portions that are positioned in front of the front surface, outside of the window portion, and that rest on the adhesive tape.

3. The IR sensor assembly according to claim 1 or 2, wherein the one or more planar optical filters are arranged so that respective end portions or peripheral portions of the planar optical filters rest on the adhesive tape.

4. The IR sensor assembly according to any one of the preceding claims, wherein the adhesive tape is a Polyimide tape.

5. The IR sensor assembly according to any one of the preceding claims, wherein the adhesive tape has a thickness in the range from 4µm to 16 µm.

6. The IR sensor assembly according to any one of the preceding claims,
wherein the one or more planar optical filters comprise a plurality of planar optical filters; and
wherein the plurality of planar optical filters are arranged side by side, with one of the lateral surfaces of each planar optical filter extending in parallel to and facing one of the lateral surfaces of another planar optical filter.

7. The IR sensor assembly according to any one of the preceding claims, further comprising:
a frame-shaped holding part with:
a top part for limiting movement of the one or more planar optical filters in a direction perpendicular to the front surface of the IR sensor; and
a lateral wall part.

8. The IR sensor assembly according to claim 7, wherein the holding part comprises one or more first through holes in the lateral wall part, each first through hole allowing for insertion of a positioning rod, for pressing one of the one or more planar optical filters that faces the respective first through hole towards a portion of the lateral wall part opposite the respective first through hole.

9. The IR sensor assembly according to claim 7 or 8, wherein the holding part further comprises one or more end stops arranged at a portion of the lateral wall part opposite the one or more first through holes, for defining a clearance between the portion of the lateral wall part opposite the one or more first through holes and one of the one or more planar optical filters that faces said portion of the lateral wall part.

10. The IR sensor assembly according to any one of claims 7 to 9, further comprising compressible glue for holding the one or more planar optical filters in place in a lateral direction, the compressible glue being provided in an enclosure formed between the holding part and the front surface of the IR sensor.

11. The IR sensor assembly according to any one of claims 7 to 10, wherein the holding part comprises one or more second through holes, each second through hole allowing insertion of compressible glue into a clearance formed between one of the one or more planar optical filters that faces the respective second through hole and a portion of the holding part.

12. The IR sensor assembly according to claim 11, wherein the clearance further extends into a gap formed between the one of the one or more planar optical filters that faces the respective second through hole and the top part.

13. The IR sensor assembly according to any one of the preceding claims, wherein the one or more planar optical filters are optically transparent in respective infrared wavelength ranges.

14. A method of manufacturing an infrared, IR, sensor assembly (100) for use in a satellite comprising one or more planar optical filters (20) and an IR sensor (10) with a substantially plane front surface (11) including a window portion (12) covering an active area of the IR sensor, the method comprising:
providing an adhesive tape (30) on the front surface (11) outside of the window portion (12), the adhesive tape (30) at least partially surrounding the window portion (12); and
arranging the one or more planar optical filters (20) to cover the window portion (12), with at least part of each planar optical filter (20) resting on the adhesive tape (30).

15. The method according to claim 14,
wherein the one or more planar optical filters are arranged so that each planar optical filter has a first portion that is positioned in front of the window portion and one or more second portions that are positioned in front of the front surface, outside of the window portion, and that rest on the adhesive tape; and/or
wherein the one or more planar optical filters are arranged so that respective end portions or peripheral portions of the planar optical filters rest on the adhesive tape.

16. The method according to claim 14 or 15,
wherein the adhesive tape is a Polyimide tape; and/or
wherein the adhesive tape has a thickness in the range from 4µm to 16 µm.

17. The method according to any one of claims 14 to 16, further comprising:
providing a frame-shaped holding part with:
a contacting part for limiting movement of the one or more planar optical filters in a direction perpendicular to the front surface of the IR sensor; and
a lateral wall part.

## Patentansprüche

1. Infrarotsensoranordnung, IR-Sensoranordnung, (100) zum Verwenden in einem Satelliten, umfassend
einen IR-Sensor (10),
wobei der IR-Sensor eine im Wesentlichen ebene, vordere Fläche (11) mit einem Fensterabschnitt (12) umfasst, wobei der Fensterabschnitt einen aktiven Bereich des IR-Sensors abdeckt;
einen oder mehrere planare(n), optische(n) Filter (20); und
ein Klebeband (30), das auf der vorderen Fläche (11) außerhalb des Fensterabschnitts (12) bereitgestellt ist, wobei das Klebeband (30) wenigstens teilweise den Fensterabschnitt (12) umgibt,
wobei ein oder mehrere planare(r), optische(r) Filter (20) angeordnet ist/sind, um wenigstens einen Teil des Fensterabschnitts (12) abzudecken, wobei wenigstens ein Teil jedes planaren optischen Filters (20) auf dem Klebeband (30) verbleibt.

2. IR-Sensoranordnung nach Anspruch 1, wobei der eine oder die mehreren planare(n), optische(n) Filter derart angeordnet ist/sind, dass jeder planare, optische Filter einen ersten Abschnitt, der gegenüber dem Fensterabschnitt angeordnet ist, und einen oder mehrere zweite Abschnitt(e), die gegenüber der ersten vorderen Fläche angeordnet ist/sind und der/die auf dem Klebeband verbleibt/verbleiben, aufweist.

3. IR-Sensoranordnung nach Anspruch 1 oder 2, wobei der eine oder die mehreren planare(n), optische(n) Filter derart angeordnet ist/sind, dass jeweilige Endabschnitte oder umlaufende Abschnitte der planaren, optischen Filter auf dem Klebeband verbleiben.

4. IR-Sensoranordnung nach irgendeinem der vorhergehenden Ansprüche, wobei das Klebeband ein Polyimidband ist.

5. IR-Sensoranordnung nach irgendeinem der vorhergehenden Ansprüche, wobei das Klebeband eine Dicke im Bereich von 4 µm bis 16 µm aufweist.

6. IR-Sensorordnung nach irgendeinem der vorhergehenden Ansprüche,
wobei der eine oder die mehreren planare(n), optische(n) Filter mehrere planare, optische Filter aufweist/aufweisen; und
wobei die mehreren planaren optischen Filter nebeneinander angeordnet sind, wobei eine der Seitenflächen jedes planaren, optischen Filters sich parallel zu und einander gegenüber den Seitenflächen eines anderen planaren, optischen Filters erstreckt.

7. IR-Sensoranordnung nach irgendeinem der vorhergehenden Ansprüche, weiterhin umfassend:
einen rahmenförmigen Halteteil mit:
einem oberen Teil zum Begrenzen der Bewegung des einen oder der mehreren planaren, optischen Filter(s) in einer Richtung, die zur vorderen Fläche des IR-Sensors lotrecht ist; und
seinen seitlichen Wandteil.

8. IR-Sensoranordnung nach Anspruch 7, wobei der Halteteil ein Durchgangsloch oder mehrere Durchgangslöcher im seitlichen Wandteil umfasst, wobei jedes Durchgangsloch das Einfügen einer Positionierungsstange zum Drücken eines des einen oder der mehreren planaren, optischen Filter(s) ermöglicht, der dem jeweiligen ersten Durchgangsloch zu einem Abschnitt des seitlichen Wandabschnitts gegenüber dem jeweiligen ersten Durchgangsloch gegenüber angeordnet ist.

9. IR-Sensoranordnung nach Anspruch 7 oder 8, wobei der Halteteil weiterhin einen oder mehrere Endstopper umfasst, der/die an einem Abschnitt des seitlichen Wandabschnitts gegenüber dem einen ersten Durchgangsloch oder den mehreren ersten Durchgangslöchern zum Definieren einer Ausnehmung zwischen dem Abschnitt des seitlichen Wandabschnitts gegenüber dem einen ersten Durchgangsloch oder den mehreren ersten Durchgangslöchern und einen des einen oder mehreren planare(n), optische(n) Filter angeordnet ist, der dem Abschnitt des seitlichen Wandteils gegenüber angeordnet ist.

10. IR-Sensoranordnung nach irgendeinem der Ansprüche 7 bis 9, weiterhin umfassend komprimierbaren Klebstoff zum Halten des einen oder der mehreren planaren, optischen Filter(s) an Ort und Stelle in einer seitlichen Richtung, wobei der komprimierbare Klebstoff in einer Einfassung bereitgestellt ist, die zwischen dem Halteteil und der vorderen Fläche des IR-Sensors gebildet ist.

11. IR-Sensoranordnung nach irgendeinem der Ansprüche 7 bis 10, wobei der Halteteil ein zweites Durchgangsloch oder mehrere zweite Durchgangslöcher umfasst, wobei jedes zweite Durchgangsloch das Einfügen von komprimierbarem Klebstof in eine Ausnehmung zulässt, die zwischen dem einen des einen oder der mehreren planaren, optischen Filter(s) gebildet ist, der dem jeweiligen zweiten Durchgangsloch und einem Abschnitt des Halteteils gegenüber angeordnet ist:

12. IR-Sensoranordnung nach Anspruch 11, wobei die Ausnehmung sich weiterhin in einen Spalt erstreckt, der zwischen dem einen des einen oder der mehreren planaren, optischen Filter(s) gebildet ist, der gegenüber dem jeweiligen zweiten Durchgangsloch und dem oberen Teil gegenüber angeordnet ist.

13. IR-Sensoranordnung nach irgendeinem der vorhergehenden Ansprüche, wobei der eine oder die mehreren planare(n), optische(n) Filter in Bezug auf jeweilige Infrarot-Wellenlängengebereiche optisch transparent ist/sind.

14. Verfahren zur Herstellung einer Infrarotsensoranordnung, IR-Sensoranordnung, (100) zum Verwenden in einem Satelliten, umfassend
einen oder mehrere planare(n), optische(n) Filter (20) und einen IR-Sensor (10) mit einer im Wesentlichen ebenen, vorderen Fläche (11), umfassend einen Fensterabschnitt (12), der einen aktiven Bereich des IR-Sensors abdeckt,
wobei das Verfahren umfasst
Bereitstellen eines Klebebandes (30) auf der vorderen Fläche (11) außerhalb des Fensterabschnitts (12), wobei das Klebeband (30) wenigstens teilweise den Fensterabschnitt (12) umgibt; und
Anordnen des einen oder der mehreren optischen Filter(s) (20) zum Abdecken des Fensterabschnitts (12) mit wenigstens einem Teil jedes planaren, optischen Filters (20), der auf dem Klebeband (30) verbleibt.

15. Verfahren nach Anspruch 14,
wobei der eine oder die mehreren planare(n), optische(n) Filter derart angeordnet ist/sind, dass jeder planare, optische Filter einen ersten Abschnitt, der gegenüber dem Fensterabschnitt angeordnet ist, und einen oder mehrere zweite Abschnitt(e), die gegenüber der vorderen Fläche außerhalb des Fensterabschnitts angeordnet ist/sind, aufweist, und der auf dem Klebeband verbleibt; und/oder
wobei der eine oder die mehreren planare(n), optische(n) Filter derart angeordnet ist/sind, dass jeweilige Endabschnitte oder umlaufende Abschnitte der planaren, optischen Filter auf dem Klebeband verbleiben.

16. Verfahren nach Anspruch 14 oder 15,
wobei das Klebeband ein Polyimidband ist; und/oder
wobei das Klebeband eine Dicke im Bereich von 4 µm bis 16 µm aufweist.

17. Verfahren nach irgendeinem der Ansprüche 14 bis 16, weiterhin umfassend:
Bereitstellen eines rahmenförmigen Halteteils mit:
einem Kontaktteil zum Begrenzen der Bewegung des einen oder der mehreren planaren, optischen Filter(s) in einer Richtung, die lotrecht zu vorderen Fläche des IR-Sensors ist; und
einem seitlichen Wandteil.

## Revendications

1. Ensemble de capteur IR (100), infrarouge, destiné à être utilisé dans un satellite, comprenant :
un capteur IR (10), dans lequel le capteur IR comprend une surface avant substantiellement plane (11) avec une portion de fenêtre (12), la portion de fenêtre (12) couvrant une zone active du capteur IR ;
un ou plusieurs filtres optiques plans (20) ; et
un ruban adhésif (30) pourvu sur la surface avant (11) hors de la portion de fenêtre (12), le ruban adhésif (30) entourant au moins partiellement la portion de fenêtre (12),
dans lequel lesdits un ou plusieurs filtres optiques plans (20) sont agencés de manière à couvrir au moins une partie de la portion de fenêtre (12), au moins une partie de chaque filtre optique plan (20) reposant sur le ruban adhésif (30).

2. Ensemble de capteur IR selon la revendication 1, dans lequel lesdits un ou plusieurs filtres optiques plans sont agencés de telle sorte que chaque filtre optique plan comporte une première portion positionnée devant la portion de fenêtre et une ou plusieurs deuxièmes portions positionnées devant la surface avant, hors de la portion de fenêtre, et reposant sur le ruban adhésif.

3. Ensemble de capteur IR selon la revendication 1 ou 2, dans lequel lesdits un ou plusieurs filtres optiques plans sont agencés de telle sorte que des portions d'extrémité ou des portions périphériques respectives des filtres optiques plans reposent sur le ruban adhésif.

4. Ensemble de capteur IR selon l'une quelconque des revendications précédentes, dans lequel le ruban adhésif est un ruban de polyimide.

5. Ensemble de capteur IR selon l'une quelconque des revendications précédentes, dans lequel le ruban adhésif présente une épaisseur comprise dans une plage de 4 µm à 16 µm.

6. Ensemble de capteur IR selon l'une quelconque des revendications précédentes,
dans lequel lesdits un ou plusieurs filtres optiques plans comprennent une pluralité de filtres optiques plans ; et
dans lequel la pluralité de filtres optiques plans sont agencés côte à côte, l'une des surfaces latérales de chaque filtre optique plan s'étendant parallèlement et faisant face à l'une des surfaces latérales d'un autre filtre optique plan.

7. Ensemble de capteur IR selon l'une quelconque des revendications précédentes, comprenant en outre une partie de maintien en forme de cadre avec :
une partie supérieure destinée à limiter le mouvement desdits un ou plusieurs filtres optiques plans dans une direction perpendiculaire à la surface avant du capteur IR ; et
une partie de paroi latérale.

8. Ensemble de capteur IR selon la revendication 7, dans lequel la partie de maintien comprend un ou plusieurs premiers trous traversants dans la partie de paroi latérale, chaque premier trou traversant permettant l'insertion d'une tige de positionnement, pour presser un filtre desdits un ou plusieurs filtres optiques plans qui fait face au premier trou traversant respectif vers une portion de la partie de paroi latérale opposée au premier trou traversant respectif.

9. Ensemble de capteur IR selon la revendication 7 ou 8, dans lequel la partie de maintien comprend en outre une ou plusieurs butées agencées sur une portion de la partie de paroi latérale opposée auxdits un ou plusieurs premiers trous traversants, pour définir un dégagement entre la portion de la partie de paroi latérale opposée auxdits un ou plusieurs premiers trous traversants et un filtre desdits un ou plusieurs filtres optiques plans qui fait face à ladite portion de la partie de paroi latérale.

10. Ensemble de capteur IR selon l'une quelconque des revendications 7 à 9, comprenant en outre une colle compressible pour maintenir en place en direction latérale lesdits un ou plusieurs filtres optiques plans, la colle compressible étant pourvue dans une enceinte formée entre la partie de maintien et la surface avant du capteur IR.

11. Ensemble de capteur IR selon l'une quelconque des revendications 7 à 10, dans lequel la partie de maintien comprend un ou plusieurs deuxièmes trous traversants, chaque deuxième trou traversant permettant l'insertion de colle compressible dans un dégagement formé entre un filtre desdits un ou plusieurs filtres optiques plans qui fait face au deuxième trou traversant respectif et une portion de la partie de maintien.

12. Ensemble de capteur IR selon la revendication 11, dans lequel le dégagement s'étend en outre dans un intervalle formé entre ledit un filtre desdits un ou plusieurs filtres optiques plans qui fait face au deuxième trou traversant respectif et la partie supérieure.

13. Ensemble de capteur IR selon l'une quelconque des revendications précédentes, dans lequel lesdits un ou plusieurs filtres optiques plans sont optiquement transparents dans les gammes de longueur d'onde infrarouge respectives.

14. Procédé de fabrication d'un ensemble de capteur IR (100), infrarouge, destiné à être utilisé dans un satellite, comprenant un ou plusieurs filtres optiques plans (20) et un capteur IR (10) avec une surface avant (11) substantiellement plane incluant une portion de fenêtre (12) couvrant une zone active du capteur IR, le procédé comprenant :
la fourniture d'un ruban adhésif (30) sur la surface avant (11) hors de la portion de fenêtre (12), le ruban adhésif (30) entourant au moins partiellement la portion de fenêtre (12) ; et
l'agencement desdits un ou plusieurs filtres optiques plans (20) de manière à couvrir la portion de fenêtre (12), au moins une partie de chaque filtre optique plan (20) reposant sur le ruban adhésif (30).

15. Procédé selon la revendication 14,
dans lequel lesdits un ou plusieurs filtres optiques plans sont agencés de telle sorte que chaque filtre optique plan comporte une première portion positionnée devant la portion de fenêtre et une ou plusieurs deuxièmes portions positionnées devant la surface avant, hors de la portion de fenêtre, et reposant sur le ruban adhésif ; et/ou
dans lequel lesdits un ou plusieurs filtres optiques plans sont agencés de telle sorte que des portions d'extrémité ou des portions périphériques respectives des filtres optiques plans reposent sur le ruban adhésif.

16. Procédé selon la revendication 14 ou 15,
dans lequel le ruban adhésif est un ruban de polyimide ; et/ou
dans lequel le ruban adhésif présente une épaisseur comprise dans une plage de 4 µm à 16 µm.

17. Procédé selon l'une quelconque des revendications 14 à 16, comprenant en outre la fourniture d'une partie de maintien en forme de cadre avec :
une partie de contact destinée à limiter le mouvement desdits un ou plusieurs filtres optiques plans dans une direction perpendiculaire à la surface avant du capteur IR ; et
une partie de paroi latérale.
